# EUROPEAN PATENT SPECIFICATION

(11) **EP 2 642 170 B1**
(45) Date of publication and mention of the grant of the patent: **23.08.2017**
(21) Application number: 13159894.8
(22) Date of filing: 19.03.2013
(51) Int. Cl.: F16K 31/126, F24D 3/10, F24H 9/14

(54) **Domestic water flow regulator and hydraulic unit in which it is included**
Regler für Haushaltswasserdurchfluss und hydraulische Einheit damit
Régulateur d'écoulement d'eau sanitaire et unité hydraulique dans lequel il est inclus

(30) Priority: 21.03.2012 IT MI20120439
(43) Date of publication of application: 25.09.2013
(73) Proprietor: FUGAS SPA, 20090 Trezzano sul Naviglio (Milan) (IT)
(72) Inventor: Fugazza, Giuseppe, 20090 Trezzano sul Naviglio (Milano) (IT)
(74) Representative: Ripamonti, Enrico

(56) References cited:
- EP-A2- 0 994 311
- DE-U1- 29 923 039
- DE-U1-202004 013 357
- GB-A- 2 317 672

## Description

A domestic water flow regulator and a hydraulic unit incorporating the same according to the introduction parts of the corresponding main claims form an object of the present invention. A flow regulator according to the preamble of the main claim is described in DE 202004013357.

The invention, in particular, refers to the systems for producing hot water, for room heating systems or for domestic purposes in which such production occurs far from the environment to be heated or in which hot domestic water is used. Such systems, like the one referred to as "remote heating", provide for that the production of hot water occurs in remote through various techniques such as heat recovery from waste disposal plants, through the actual heating of water in decentred tanks with respect to the environments in which such hot water is used or the like.

Hydraulic units which allow the use for such hot water produced in remote for heating environments or for domestic use are known. Generally, such hydraulic units comprise a domestic water flow regulator within an exchanger to which there reaches and in which there also circulates the heated water (produced in remote). Such regulator comprises internal valves adapted to regulate the passage of domestic water and in the heated water in the exchanger so as to heat the domestic water and use it in the environment.

The known hydraulic units (such as for example the one described in EP1096354) comprise flow regulators having valves actuated electrically or however actuated by electrically controlled external members (such as a thermostat). This limits the use of such hydraulic units and flow regulators to environments where electrical power supply is present.

Furthermore, the known solutions are however complex (for example due the use of thermostats or thermostat-equipped valves in the flow regulators) and the cost is considerably high.

An object of the present invention is to provide a hydraulic unit and a flow regulator present therein the latter being improved with respect to the known equivalent solutions.

In particular, an object of the invention is to provide said hydraulic unit and said regulator which are capable of operating without requiring electrical power supply, thus facilitating the use thereof.

Another object is that of providing an invention that is simple to obtain and inexpensive with respect to the known solutions.

These and other objects which will be apparent to a man skilled in the art are attained by a hydraulic unit and by a flow regulator according to the attached claims.

For a better understanding of the present invention there are attached, purely by way of non-limiting example, the following drawings, wherein:
figure 1 shows a front view of a hydraulic unit according to the invention;
figure 2 shows a perspective view of a flow regulator according to the invention;
figure 3 shows a front view of the regulator of figure 2;
figure 4 shows a sectional view according to line 4-4 of figure 3 of the flow regulator in a first work position;
figure 5 shows a view analogous to that of figure 4, but with the regulator in a different work position; and
figures 6 and 7 show a variant of the hydraulic unit in two different operating steps with some parts in transverse section for more clarity.

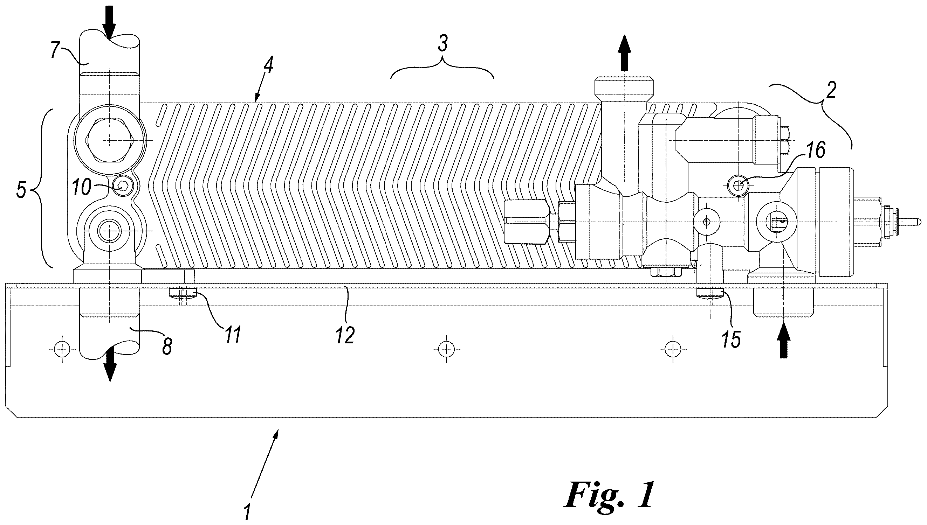

With reference to the aforementioned figures, therein there is shown a hydraulic unit 1 (see figure 1) and, more in particular, a regulator 2 of the flow of domestic water directed to an exchanger 3. The latter, of the known type, comprises a body 4 to which there is connected a connector member 5, per se known, to which there are respectively connected a conduit 7 of heated water and a conduit 8 of heated domestic water. The conduit 7 introduces water into the exchanger 3, said water being heated in remote i.e. from a distance. For example, the conduit 7 is connected to a remote heating plant (not shown) which provides for that the water be heated in an area far from the environment in which the hydraulic unit 1 is arranged and in which the domestic water is used.

In the conduit 7 (and in the conduits of the exchanger 3 connected thereto) there may circulate water of any type, even non-potable, while in the conduit 8, flowing out from the aforementioned exchanger, there circulates clean and potable water for domestic use.

The connector member 5 is fixed in a known manner to the exchanger 3 for example also through screws 10 and 11, the latter constraining a panel 12 to the member 5. A screw 15 connects such flow regulator panel 2 which is in turn fixed to the exchanger 3 through screws, including the screw 16.

The regulator 2 comprises a body 17 having an inlet 18 for domestic water in which there is arranged a common filter 20 and which is connected with an internal cavity 21 of such body. Such cavity contains various components of the regulator 2 which divide it, as described hereinafter, into a plurality of chambers.

A first of such chambers is the chamber 22 directly connected to the inlet for the domestic water (cold) 18. The chamber is delimited by two ring nuts 26 and 27, annular-shaped, which can be made of a single piece (such as the shown ring nut 26) or comprising several coupled bodies (such as the shown ring nut 27). Within the holes 26A and 27A of said ring nuts there is present, passing through, a driving shaft 29 having a free interceptor conical end 30 adapted to cooperate with the hole 27A of the ring nut 27 so as to close it again or intercept it.

The driving shaft 29 has an internal conduit 31, laterally opening on the surface of such shaft in a hole 33 in the first chamber 22 mentioned above. The shaft 29 supports, through a plate 35, a flexible membrane 36 which delimits two adjacent chambers 37 and 38. The first chamber is delimited by the ring nut 27 and by the plate and membrane 36, while the chamber 38 is proximal to a free end 2A of the flow regulator 2. In this chamber there is arranged a spring 40 which operates, from one side, on a body 41 fitted on the shaft 29 and associated to the plate 35 (which supports the membrane 36) and on the other side on a closing element 42, perforated axially in 42A, which closes a passage in the end 2A and which communicates with the external of the body 2. Through such hole 42, an end 29A of the shaft 29 projects from the body 17 and may be coupled to a microswitch (not shown) adapted to detect the pressure variation within the regulator through the movement of the shaft 29. Such microswitch may cooperate with a pump (not shown) arranged on the circuit of the heated water to increase the out flow thereof to the exchanger 3.

The internal conduit 31 of the shaft 29 opens, through a hole 45, in the chamber 38, while the chamber 37 is connected to a chamber 46 arranged beyond the ring nut 26 and the end 30 of the shaft 29 through a channel or conduit 47 provided in the body 17. The chamber 46 is present between said ring nut 26 and a closing body 48 which entirely intercepts the cavity 21 closing it and separating it from a conduit 49, within the body 2.

The chamber 46 is connected to an outlet 50 for the domestic water directed to the exchanger 3 and in communication with the internal conduits of the latter through which such water may reach the connector member 5 and therefrom to the conduit 8 mentioned above.

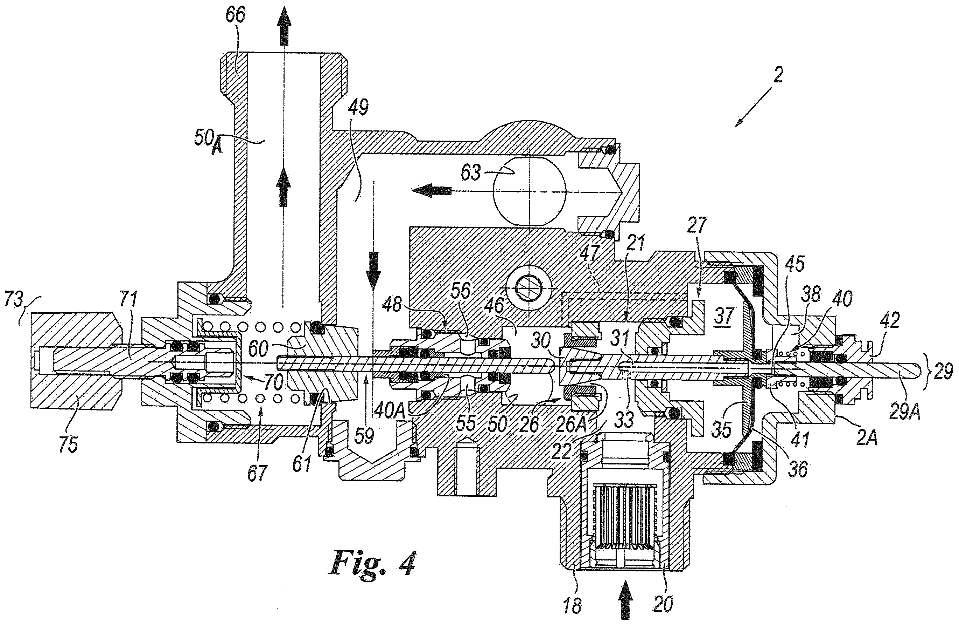

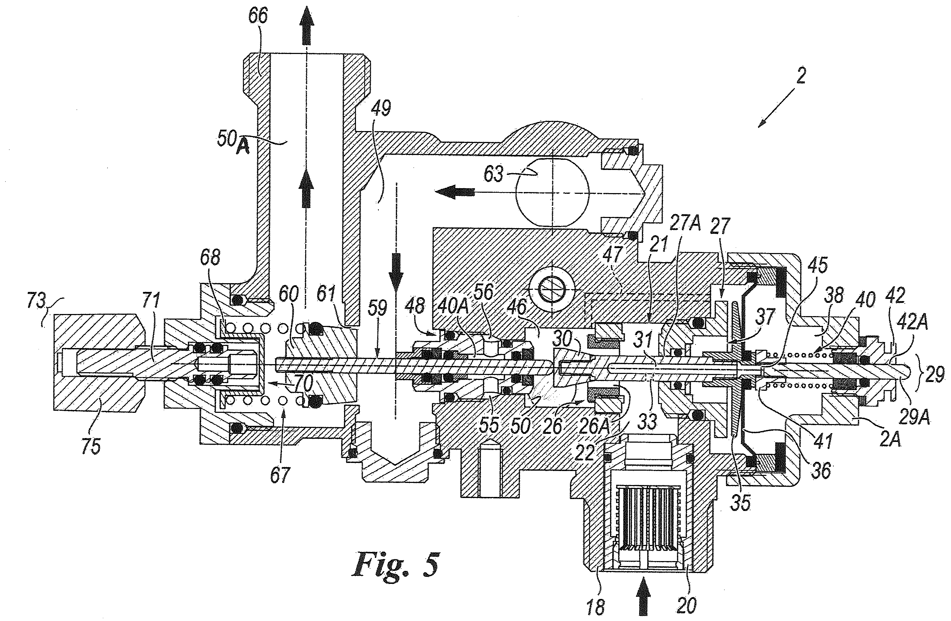

The closing body 48 (provided, like the other components of the regulator 2 with the common annular sealing elements shown in figures 4 and 5, elements which are not described further hereinafter) thus separates the internal of the regulator 2 into two portions, a first portion comprising the chambers 22, 37, 38 and 46 in which the domestic (and, thus, bacteriologically clean and definitely potable) water flows and a second portion comprising the conduit 49 and a conduit 50A in which the heated water flows; the latter may be of any type, even not potable.

The body 40 however provides an annular cavity 55 which leads the possible water (domestic, coming from the chamber 46 or heated coming from the conduit 49) which may pass between such body 40 and the wall of the cavity 21 within a tank 56 from which such water may be drawn operating on a discharge screw 57 arranged on the surface of the body 17 of the regulator 2.

In the body 40 provided with a through hole 40A there is arranged a driving shaft 59 projecting in the chamber 46 and associated with a valve element 60 arranged, moveable, at a hole 61 present between the conduit 49 and the aforementioned conduit 50A.

Such conduit 49 communicates, through an opening of the inlet 63, with the internal of the exchanger 3 in which there circulates the heated water coming from the conduit 7 so as to allow, with the movement of the element or valve member 60 and the opening of the hole 61, the passage of the heated water from the exchanger to an outlet 66 of the regulator 2 connected to the circuit for such water.

The valve element 60 is subjected to the action of a spring 67 arranged in the conduit 50A and lying on a flange 68 of a socket 70 associated with a shaft 71 of a regulator element 73 adapted to allow the regulation of the flow of heated water through the hole 61 (and thus the temperature of the domestic water); this through an action on the element 60 obtained through the spring 67 introduced by the regulator element 73. The latter is provided with a regulation knob 75.

During then use of the hydraulic unit 1 and the relative flow regulator 2, when the domestic water is required, this is returned to the body 17. The water, however previously present in the regulator, increases the outflow thereof in the chamber 22, passes into the conduit 31 of the shaft 29 through the hole 33 and penetrates into the chamber 38 through the hole 45. The pressure in such chamber 38 increases and the action of the water on the membrane 36 (fixed in a known manner at the end thereof to the body 17) leads to the flexure towards the ring nut 27 with the ensuing movement of the driving shaft 29 towards the body 48. This also facilitated by the spring 40 which presses on the plate 34 in the same towards and in the direction of the water which passes in the chamber 38.

The water present in the chamber 37 passes into the chamber 46 through the conduit 47 allowing the "bloating" of the membrane and the ensuing displacement of the shaft 29 towards the closing body 48. This first leads to separating the conical end 30 from the hole 27A allowing the domestic water flowing into the body 17 to pass through the hole and reach the outlet conduit 50. Simultaneously, after a first free movement, such end comes into contact with the driven shaft 59 (from which it had been initially spaced) and pushes the latter towards the regulation element 73. Such movement leads to that of the valve element 60 which opens the hole 61 facilitating the flow of heated water from the conduit 49 (and thus from the inlet 63 and i.e. from the exchanger 3) to the 50A one. This allows the flow of heated water in the exchanger, the water thus transferring the heat thereof to the domestic water which flows in the exchanger coming from the outlet 50A of the regulator 2.

The more the domestic water penetrates into the body 17, the greater the displacement of the driving shaft 29 and the driven shaft 59 with ensuing greater opening of the hole 61 and greater flow of heated water into the regulator 2 and thus into the exchanger 3. This leads to a rapid heating of the domestic water present in the exchanger itself to the advantage of comfort of use for such water by the consumers.

It should be observed that the microswitch associated to the end 29A of the shaft 29 may increase the speed and the amount of movement of the latter operating on the pump, with obvious consequences in terms of the speed of use of the unit 1.

Simultaneously, the flow of the heated water may be controlled through the regulator element 73: operating on the knob 75 allows making the spring 67 stiffer and contrasting the movement of the valve element moving away from the hole 61. This allows regulating the flow of heated water in the exchanger thus regulating the temperature of the domestic water flowing water.

Thus, the regulator 2 allows regulating both the flow of the heated water in the unit 1 thus regulating the heating speed of the domestic water, and maintaining the temperature of the latter constant even by modifying the flow rate thereof. All this through an entirely mechanical solution, which does not require electrical power supply and which operates only according to the pressure of the inflowing domestic water. This leads to an easy use of the invention even in conditions of absence of electrical power supply in the environment in which the unit 1 is present.

Furthermore, the regulator 2 is easy to obtain, of reliable in use (only uses mechanical members) and inexpensive.

An embodiment of the invention has been described; however, there are other possible embodiments and they shall be deemed to fall within the scope of protection of the claims that follow in the application thereof.

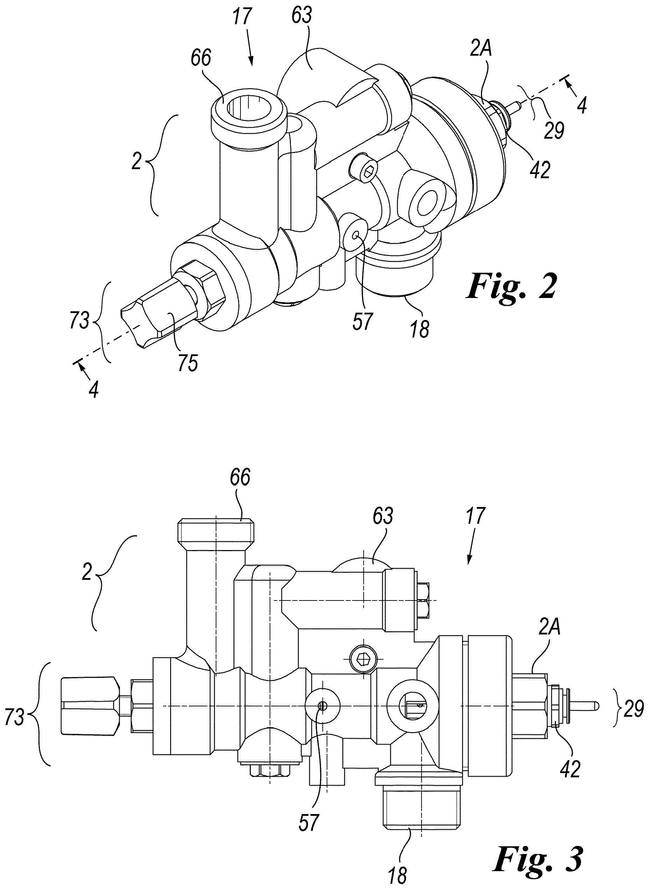

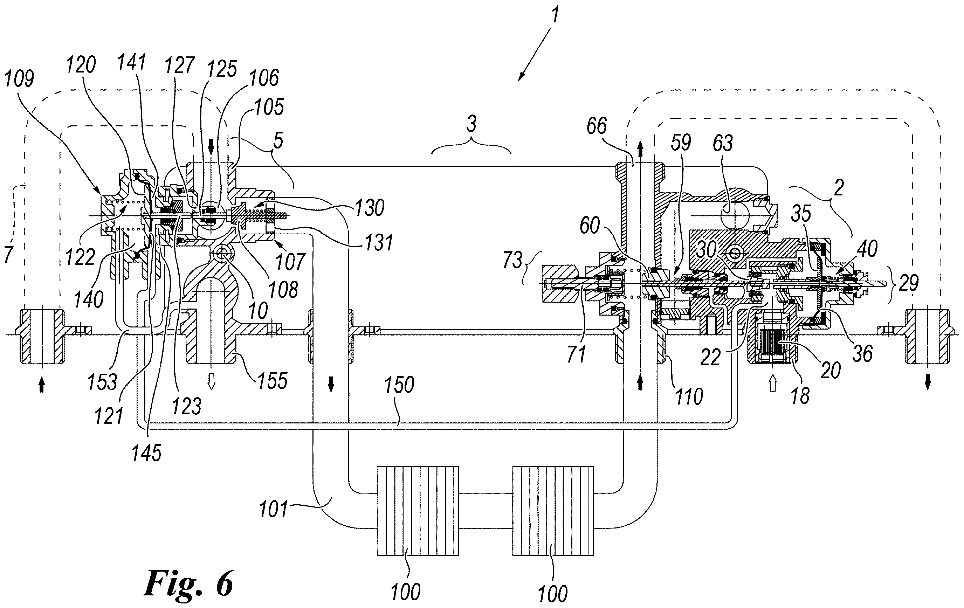

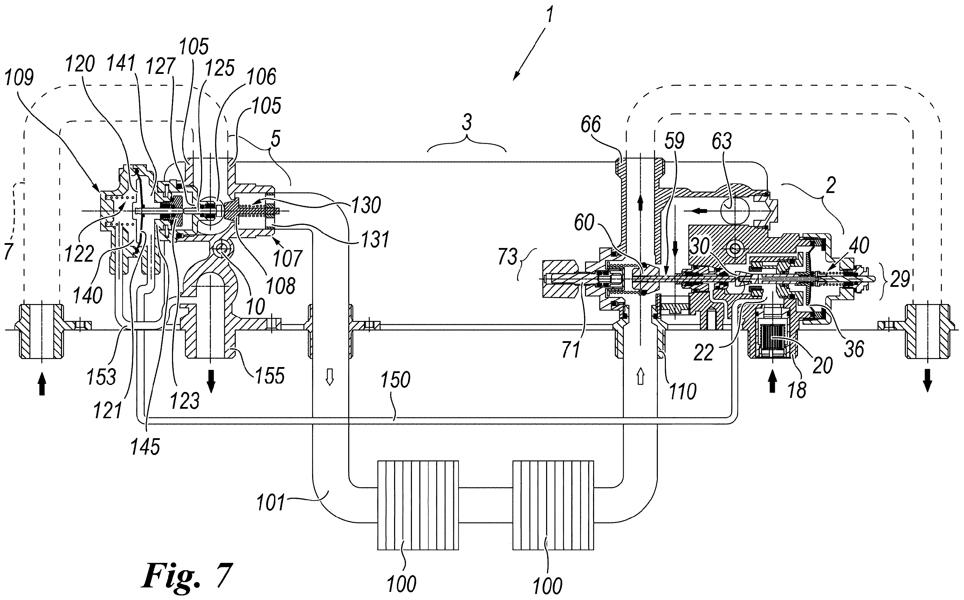

In figures 6 and 7 there are shown two steps for using a hydraulic unit 1 obtained according to a variant of the invention. In particular, in figure 6 there is shown the unit 1 used for sending heated water to heat radiators 100 through a conduit 101 which connects the connector member 5 to the regulator 2 and on which such heat radiators are arranged. With the aim of obtaining the variant in question, both the connector member 5 and the regulator 2 are made having small variants with respect to the solution of figures 1-5 described beforehand.

More in particular, the regulator 2 comprises a second inlet 110 for the heated water (besides the first, the 63 one, previously described with reference to figures 1-5) which is placed in direct connection (i.e. without any member interrupting the latter) with the outlet 66. Such inlet 110 is connected to the conduit 101 and heated water circulates therein.

The latter, produced in remote, reaches the member 5 from the conduit 7 and penetrates into the aforementioned member through an inlet 105. The latter is connected to a first outlet of the heated water 106 connected to the exchanger 3 and to a second outlet 107 for such water to which the conduit 101 is connected. This second outlet 107 may be intercepted and closed by a valve member or a shutter 108 subjected to a pressure regulation actuator 109. The latter comprises a plate 120 supporting a membrane 121 and subjected to a spring 122. To the plate there is associated a stem 123 adapted to cooperate with a stem 125 integral with the valve member 108 and slidably moveable and passing through a seat 127 of the connector member 5. The valve member 108 is subjected to a spring 130 lying on an abutment 131 integral with the member 5.

The spring 122 is arranged in a first chamber 140 of the actuator 109, while a second chamber 141 is arranged between the membrane 121 and a member 145 in which the stem 123 slides.

The second chamber 141 is connected, through a pipe 150 to the chamber 22 of the regulator 2, while the first chamber 140 of the member 5 is connected, through a pipe 153 to an outlet 155 of the member 5 connected to the conduit 8 of the latter.

In the step in which the unit 1 is inoperative, it allows the circulation of the heated water towards the heat radiators 100. This is shown in figure 6, in which the regulator 5 has the first valve member (defined by the ring nut 26 and the 27 ones, by the shaft 29, by the plate 35 and by the membrane 36) in the position in which it does not operate on the second valve member 60 (which thus closes the communication between the inlet 63 and the outlet 66 of the regulator 2 and the flow of heated water from the exchanger to such outlet). At the same time, the member 5 has the shutter 108 in the position in which it allows the communication between the conduit 7 with the 101 one hence the heated water may pass from the inlet 105 of the member 5 to the heat radiators 100, to the inlet 110 of the regulator 2 and flow out from the outlet 66 of the latter. The water may thus return to the place of heating.

In case of production of domestic water, the regulator 2 operates as described previously with reference to figures 1-5 and at the same time the shutter 108 is closed due to the domestic water which, from the chamber 22 and through the pipe 150, reaches the hinge 141 of the member 5; such water operates on the membrane 121 and closes the shutter 108.

Thus, as long as there is demand of domestic water there is no passage of heated water from the conduit 7 to the 101 one and hot domestic water may be produced.

Also this variant shall be deemed falling within the scope of protection of the claims that follow.

## Claims

1. Flow regulator adapted to be used in a hydraulic unit, the latter comprising a heat exchanger (3), said regulator comprising a body (17) having a domestic water inlet (18), an outlet (50) for such water, at least one first inlet (63) for remote heated water and an outlet (66) for such water, said regulator being adapted to be connected to the heat exchanger (3) wherein said domestic water is heated through heat exchange with said heated water, said regulator (2) allowing regulating the flow of heated water in said exchanger (3), the regulator comprising a first autonomous valve member (26, 27, 29, 35, 36) for regulating the flow of domestic water and a second autonomous valve member for regulating the flow of heated water therein, said first valve member (26, 27, 29, 35, 36) being moved within said body (17) only by the domestic water flowing into the regulator (2), said first valve member comprising a driving shaft (29) adapted to cooperate with a driven shaft (59) integral with the second valve member (60) and moveable in said body (17) proportionally to the flow of domestic water flowing into the regulator (2), such movement being obtained by the action of the driving shaft (29) on the driven shaft (59) following the flow of the domestic water in the regulator (2), the aforementioned movement leading to a proportional movement of the second valve member (60) so as to allow a flow of heated water in the regulator (2) and thus in the exchanger (3) proportional to the flow of domestic water flowing into the regulator and thus in the exchanger, **characterised in that** the first valve member comprises a first and a second ring nut (26, 27) spaced from each other and defining a first chamber (22) connected to the inlet for the domestic water (18) in the body (17) of the regulator, said ring nuts (26, 27) being perforated and containing, passing through and moveable, the driving shaft (29) integral with a membrane (36) fixed within the body of the regulator and moveable under the action of the domestic water flowing into the aforementioned body (17), such membrane (36) defining with the second ring nut (27) and with an end (2A) of such body (17) a second and a third separate chamber (37, 38), the second chamber (37) communicating with a fourth chamber (46) arranged downstream of the first ring nut (26) and connected to the outlet for the domestic water (50), the third chamber (38) communicating with the inlet for the domestic water (18) through a conduit (31) inside the driving shaft (29).

2. Flow regulator according to claim 1, **characterised in that** the fourth chamber (46) communicates with the hole (26A) of the first ring nut (26) in which there is movable an interceptor end (30) of the driving shaft, the displacement of such end (30) from said hole (26A) when the shaft moves following the action of the domestic water on the membrane (36) placing the inlet for the domestic water (18) in the regulator (2) in direct communication with the flowing out of such water (50) from the regulator (2).

3. Flow regulator according to claim 2, **characterised in that** the interceptor end (30) of the driving shaft (29) is adapted to cooperate with the driven shaft (59), said interceptor end (30) being distant from such driven shaft (59) when said end closes the hole (26A) of the first ring nut (26).

4. Flow regulator according to claim 1, **characterised in that**: an end (29A) of said driving shaft (29) projects from the body (17) of the regulator (2) and cooperates with a microswitch in turn adapted to cooperate with a pump arranged on the circuit of the heated water.

5. Flow regulator according to claim 1, **characterised in that** there is provided a spring (67) adapted to contrast the movement of the second valve member (60), the action of said spring (67) being advantageously variable through the action on a regulator element (73) outside the body (17) of the regulator.

6. Flow regulator according to claim 1, **characterised in that** it comprises a second inlet (110) of domestic water connected to a heating system, said second inlet (110) being directly connected, to the outlet (66) of such heated water from the regulator.

7. Flow regulator according to claim 1, **characterised in that** the second valve member (60) intercepts a hole (61) of communication between conduits (49, 50A) within the body (17) of the regulator (2) and respectively connected to the inlet (63) of the heated water in such body (17) and to the outlet (66) of said water from the latter, the movement of such valve member in the aforementioned hole (61) under the action of the driven shaft (59) being proportional to the domestic water flowing into the aforementioned body (17) **in that** the movement of the driving shaft (29), operating on the driven shaft (59), is in turn proportional to the flow rate of domestic water flowing into the body (17) of the regulator.

8. Flow regulator according to claim 1, **characterised in that** the first valve member and the second valve member (60) are arranged in a cavity (21) of the body (17) of the regulator (2), said first valve member (26, 27, 29, 35, 36) and said second valve member (60) being arranged in portions of the aforementioned cavities (21) separated from each other by a closing member (48) of the latter.

9. Hydraulic unit (1) comprising a domestic water flow regulator (2) and a heat exchanger (3), said regulator (2) being obtained according to claim 1.

10. Hydraulic unit according to claim 9, **characterised in that** it comprises a collector member (5) connected to the exchanger (3) and connected to a conduit (7) for introducing the heated water into said exchanger (3) and to a conduit (8) for the flowing out of domestic water from said exchanger (3).

11. Hydraulic unit according to claim 10, **characterised in that** said collector member (5) comprises controlled valve means (108) adapted to direct the heated water flowing into a conduit (101) of a heating system of an environment when a first valve member (26, 27, 29, 35, 36) of the regulator (2) is in a work position in which a second valve member (60) of the latter intercepts the communication between a first inlet (63) for the heated water and an outlet (66) for the latter from the flow regulator (2).

12. Hydraulic unit according to claim 9, **characterised in that** it comprises a pipe (150) connecting a chamber (22) of the flow regulator (2), connected to an inlet (18) for the domestic water in the latter, with a chamber (141) of the collector member (5) arranged between a moveable element (120, 121) of a pressure regulation actuator (109) controlling the valve means (108) adapted to direct the heated water flowing into such collector member (5) towards the heating system, and an element (145) in which there slides a stem (123) for controlling such valve means (108).

13. Hydraulic unit according to claim 12, **characterised in that** such collector member comprises a different chamber (140) arranged upstream of the moveable element (120, 121) of the pressure regulation actuator (109) and connected through a pipe (153) to the conduit (8) for the flowing out of the domestic water from such member (5).

## Patentansprüche

1. Durchflussregler zur Benutzung in einer hydraulischen Einheit, wobei diese einen Wärmeaustauscher (3) umfasst, wobei der genannte Regler einen Körper (17) umfasst, der einen Einlass (18) für Haushaltswasser, einen Auslass (50) für dieses Wasser, mindestens einen ersten Einlass (63) für fern-erwärmtes Wasser und einen Auslass (66) für dieses Wasser hat, wobei der genannte Regler dazu ausgebildet ist, mit dem Wärmeaustauscher (3) verbunden zu sein, worin das genannte Haushaltswasser durch Wärmeaustausch mit dem genannten erwärmten Wasser erwärmt wird, wobei der genannte Regler (2) erlaubt, den Durchfluss des erwärmten Wassers in dem genannten Wärmeaustauscher (3) zu regeln, wobei der Regler ein erstes eigenständiges Ventilelement (26, 27, 29, 35, 36) zum Regeln des Durchflusses des Haushaltswassers sowie ein zweites eigenständiges Ventilelement zur Regeln des Durchflusses des erwärmten Wassers darin umfasst, wobei das genannte erste Ventilelement (26, 27, 29, 35, 36) in dem genannten Körper (17) nur durch das in den Regler (2) einfliessende Haushaltswasser bewegt wird, wobei das genannte Ventilelement eine Antriebswelle (29) umfasst, die dazu ausgebildet ist, mit einer angetriebenen Welle (59) zusammenzuarbeiten, die einstückig mit dem zweiten Ventilelement (60) ausgebildet und in dem genannten Körper (17) im Verhältnis zu dem in den Regler (2) einfließenden Haushaltswasser-Durchfluss bewegbar ist, wobei die genannte Bewegung unter der Wirkung der Antriebswelle (29) auf die angetriebene Welle (59) nach dem Durchfluss des Haushaltswassers in den Regler (2) erfolgt, wobei die genannte Bewegung eine proportionale Bewegung des zweiten Ventilelements (60) verursacht, so dass ein Durchfluss des erwärmten Wassers in den Regler (2) und deshalb in den Austauscher (3), im Verhältnis zu dem Durchfluss des in den Regler und deshalb in den Austauscher einfliessenden Haushaltswassers, ermöglicht wird, **dadurch gekennzeichnet, dass** das erste Ventilelement eine erste sowie eine zweite Ringmutter (26, 27) umfasst, die voneinander beabstandet sind und eine erste, mit dem Haushaltswasser-Einlass (18) in dem Körper (17) des Reglers verbundene Kammer (22) bilden, wobei die genannten Ringmutter (26, 27) durchlöchert sind und die durchquerende und bewegbare Antriebswelle enthalten, wobei die Antriebswelle (29) einstückig mit einer in dem Körper des Reglers befestigten und unter der Wirkung des in den genannten Körper (17) einfliessenden Hauhaltswassers bewegbaren Membran (36) ausgebildet ist, wobei die genannte Membran (36) mit der zweiten Ringmutter (27) und mit einem Ende (2A) des genannten Körpers (17) eine zweite sowie eine dritte getrennte Kammer (37, 38) bildet, wobei die zweite Kammer (37) mit einer vierten, der ersten Ringmutter (26) nachgeordneten und mit dem Haushaltswasser-Auslass (50) verbundenen Kammer (46) in Verbindung steht, wobei die dritte Kammer (38) durch ein Rohr (31) in der Antriebswelle (29) mit dem Haushaltswasser-Einlass (18) in Verbindung steht.

2. Durchflussregler nach Anspruch 1, **dadurch gekennzeichnet, dass** die vierte Kammer (46) mit der Bohrung (26A) der ersten Ringmutter (26) in Verbindung steht, worin ein bewegbares abfangendes Ende (30) der Antriebswelle vorhanden ist, wobei die Verschiebung des genannten Ende (30) aus der genannten Bohrung (26A) bei der Bewegung der Welle unter der Wirkung des Haushaltswassers auf die Membran (36) den Haushaltswasser-Einlass (18) in dem Regler (2) in direkter Verbindung mit dem aus dem Regler (2) ausfliessenden Wasser (50) setzt.

3. Durchflussregler nach Anspruch 2, **dadurch gekennzeichnet, dass** das anfangende Ende (30) der Antriebswelle (29) dazu ausgebildet ist, mit der angetriebenen Welle (59) zusammenzuarbeiten, wobei das genannte anfangende Ende (30) von dem genannten angetriebenen Welle (59) bei der Schließung der Bohrung (26A) der ersten Ringmutter (26) entfernt ist.

4. Durchflussregler nach Anspruch 1, **dadurch gekennzeichnet, dass**: Ein Ende (29A) der genannten Antriebswelle (29) von dem Körper (17) des Reglers (2) herausragt und mit einem Mikroschalter zusammenarbeitet, wobei der Mikroschalter wiederum dazu ausgebildet ist, mit einer an dem Kreislauf des erwärmten Wassers angeordneten Pumpe zusammenzuarbeiten.

5. Durchflussregler nach Anspruch 1, **dadurch gekennzeichnet, dass** eine Feder (67) vorhanden ist, die dazu ausgebildet ist, sich der Bewegung des zweiten Ventilelements (60) zu widersetzen, wobei die Wirkung der genannten Feder (67) sich unter der Wirkung eines Stellelements (73) außerhalb des Körpers (17) des Reglers vorteilhaft verändert.

6. Durchflussregler nach Anspruch 1, **dadurch gekennzeichnet, dass** er einen mit einer Heizungsanlage verbundenen zweiten Haushaltswasser-Einlass (110) umfasst, wobei der genannte zweite Einlass (110) mit dem Auslass (66) des genannten erwärmten Wassers von dem Regler unmittelbar verbunden ist.

7. Durchflussregler nach Anspruch 1, **dadurch gekennzeichnet, dass** das zweite Ventilelement (60) eine Verbindungsbohrung (61) zwischen Rohren (49, 50A) in dem Körper (17) des Reglers (2) abfängt und mit dem Einlass (63) des erwärmten Wassers in den genannten Körper (17) sowie mit dem Auslass (66) des genannten Wassers davon verbunden ist, wobei die Bewegung des genannten Ventilelements in der genannten Bohrung (61) unter der Wirkung der angetriebenen Welle (59) im Verhältnis zu dem Haushhaltswasser-Durchfluss in den genannten Körper (17) ist, denn die Bewegung der auf die angetriebenen Welle (59) wirkenden Antriebswelle (29) wiederum im Verhältnis zu der Durchflussgeschwindigkeit des in den Körper (17) des Reglers einfliessenden Haushaltswassers ist.

8. Durchflussregler nach Anspruch 1, **dadurch gekennzeichnet, dass** das erste Ventilelement und das zweite Ventilelement (60) in einer Kavität (21) des Körpers (17) des Reglers (2), wobei das genannte erste Ventilelement (26, 27, 29, 35, 36) und das genannte zweite Ventilelement (60) in Teilen der genannten Kavität (21), durch ein Schließelement (48) davon voneinander getrennt angeordnet sind.

9. Hydraulische Einheit (1) umfassend einen Regler für Haushaltswasserdurchfluss (2) und einen Wärmeaustauscher (3), wobei der genannte Regler (2) nach Anspruch 1 erzielt wird.

10. Hydraulische Einheit nach Anspruch 9, **dadurch gekennzeichnet, dass** sie ein mit dem Austauscher (3) sowie mit einem Rohr (7) für die Einführung des erwärmten Wassers in den genannten Austauscher (3) und mit einem Rohr (8) für den Auslass des Haushaltswassers aus dem genannten Austauscher (3) verbundenes Sammelelement (3) umfasst.

11. Hydraulische Einheit nach Anspruch 10, **dadurch gekennzeichnet, dass** der genannte Sammelelement (5) gesteuerte Ventilmittel (108) umfasst, die dazu ausgebildet sind, das erwärmte Wasser zu einem Rohr (101) einer Heizungsanlage einer Umgebung zuzuführen, als ein erstes Ventilelement (26, 27, 29, 35, 36) des Reglers (2) in einer Arbeitsstellung ist, worin ein zweites Ventilelement (60) davon die Kommunikation zwischen einem ersten Einlass (63) für das erwärmte Wasser und einem Auslass (66) dafür aus dem Durchflussregler (2) abfängt.

12. Hydraulische Einheit nach Anspruch 9, **dadurch gekennzeichnet, dass** sie eine Leitung (150) umfasst, die eine mit einem Haushaltswasser-Einlass (18) in dem Durchflussregler verbundene Kammer (22) des Durchflussreglers (2) mit einer Kammer (141) des Sammelelements (5) verbindet, wobei die Kammer (141) zwischen einem bewegbaren Element (120, 12.1) eines Druckregulierungsaktors (109), der die zur Zuführung des erwärmten Wassers zu dem genannten Sammelelement (5) gegen die Heizungsanlage geeigneten Ventilmittel (108) steuert, und einem Element (145), worin ein Schaft (123) zur Steuerung der genannten Ventilmittel (108) verschiebt.

13. Hydraulische Einheit nach Anspruch 9, **dadurch gekennzeichnet, dass** das genannte Sammelelement eine verschiedene, dem bewegbaren Element (120, 121) des Druckregulierungsaktors (109) vorgeschaltete und durch eine Leitung (153) mit dem Rohr (8) zum Auslass des Haushaltswassers aus dem genannten Sammelelement (5) verbundene Kammer (140) umfasst.

## Revendications

1. Régulateur d'écoulement conçu pour être utilisé dans une unité hydraulique, cette dernière comprenant un échangeur de chaleur (3), ledit régulateur comprenant un corps (17) ayant une entrée pour l'eau sanitaire (18), une sortie (50) pour cette eau, au moins une première entrée (63) pour l'eau chauffée à distance et une sortie (66) pour cette eau, ledit régulateur étant conçu pour être relié à l'échangeur de chaleur (3), où ladite eau sanitaire est chauffée par échange de chaleur avec ladite eau chauffée, ledit régulateur (2) permettant de régler l'écoulement de l'eau chauffée dans ledit échangeur (3), le régulateur comprenant un premier élément de soupape (26, 27, 29, 35, 36) autonome pour régler l'écoulement de l'eau sanitaire et un second élément de soupape autonome pour régler l'écoulement de l'eau chauffée à son intérieur, ledit premier élément de soupape (26, 27, 29, 35, 36) étant déplacé à l'intérieur dudit corps (17) seulement par l'eau sanitaire s'écoulant dans le régulateur (2), ledit premier élément de soupape comprenant un arbre moteur (29) conçu pour coopérer avec un arbre récepteur (59) formant une seule pièce avec le second élément de soupape (60) et mobile dans ledit corps (17) proportionnellement à l'écoulement d'eau sanitaire dans le régulateur (2), ce mouvement étant obtenu par l'action de l'arbre moteur (29) sur l'arbre récepteur (59) suivant l'écoulement de l'eau sanitaire dans le régulateur (2), ledit mouvement entraînant un mouvement proportionnel du second élément de soupape (60) de sorte à permettre un écoulement d'eau chauffée dans le régulateur (2) et donc dans l'échangeur (3) proportionnel à l'écoulement de l'eau sanitaire dans le régulateur et donc dans l'échangeur, **caractérisé en ce que** le premier élément de soupape comprend un premier et un second écrou à oeillet (26, 27) espacés l'un de l'autre et définissant une première chambre (22) reliée à l'entrée pour l'eau sanitaire (18) dans le corps (17) du régulateur, lesdits écrous à oeillet (26, 27) étant troués et contenant l'arbre moteur (29) passant à travers eux et mobile, l'arbre moteur (29) formant une seule pièce avec une membrane (36) fixée à l'intérieur du corps du régulateur et mobile sous l'action de l'eau sanitaire qui s'écoule dans ledit corps (17), cette membrane (36) définissant avec le second écrou à oeillet (27) et avec une extrémité (2A) dudit corps (17) une deuxième chambre et une troisième chambre séparées (37, 38), la deuxième chambre (37) communiquant avec une quatrième chambre (46) agencée en aval du premier écrou à oeillet (26) et reliée à la sortie pour l'eau sanitaire (50), la troisième chambre (38) communiquant avec l'entrée pour l'eau sanitaire (18) à travers un conduit (31) à l'intérieur de l'arbre moteur (29).

2. Régulateur d'écoulement selon la revendication 1, **caractérisé en ce que** la quatrième chambre (46) communique avec le trou (26A) du premier écrou à oeillet (26) dans lequel une extrémité d'interception mobile (30) de l'arbre moteur est présente, le déplacement de cette extrémité (30) dudit trou (26A) lorsque l'arbre bouge suivant l'action de l'eau sanitaire sur la membrane (36) mettant l'entrée pour l'eau sanitaire (18) dans le régulateur (2) en communication directe avec cette eau (50) sortant du régulateur (2).

3. Régulateur d'écoulement selon la revendication 2, **caractérisé en ce que** l'extrémité d'interception (30) de l'arbre moteur (29) est conçue pour coopérer avec l'arbre récepteur (59), ladite extrémité d'interception (30) étant distante dudit arbre récepteur (59) lorsque ladite extrémité ferme le trou (26A) du premier écrou à oeillet (26).

4. Régulateur d'écoulement selon la revendication 1, **caractérisé en ce que** : une extrémité (29A) dudit arbre moteur (29) fait saillie du corps (17) du régulateur (2) et coopère avec un microrupteur, á son tour conçu pour coopérer avec une pompe agencée sur le circuit de l'eau chauffée.

5. Régulateur d'écoulement selon la revendication 1, **caractérisé en ce qu'**un ressort (67) est prévu, conçu pour opposer le mouvement du second élément de soupape (60), l'action dudit ressort (67) étant avantageusement variable sous l'action d'un élément de régulation (73) à l'extérieur du corps (17) du régulateur.

6. Régulateur d'écoulement selon la revendication 1, **caractérisé en ce qu'**il comprend une seconde entrée (110) pour l'eau sanitaire reliée à un système de chauffage, ladite seconde entrée (110) étant reliée directement à la sortie (66) de cette eau chauffée du régulateur.

7. Régulateur d'écoulement selon la revendication 1, **caractérisé en ce que** le second élément de soupape (60) intercepte un trou (61) de communication entre conduits (49, 50A) à l'intérieur du corps (17) du régulateur (2) et est relié respectivement à l'entrée (63) pour l'eau chauffée dans ledit corps (17) et à la sortie (66) de ladite eau de celle-ci, le mouvement dudit élément de soupape dans ledit trou (61) sous l'action de l'arbre récepteur (59) étant proportionnel à l'eau sanitaire s'écoulant dans ledit corps (17), car le mouvement de l'arbre moteur (29) agissant sur l'arbre récepteur (59) est à son tour proportionnel au débit d'eau sanitaire s'écoulant dans le corps (17) du régulateur.

8. Régulateur d'écoulement selon la revendication 1, **caractérisé en ce que** le premier élément de soupape et le second élément de soupape (60) sont agencés dans une cavité (21) du corps (17) du régulateur (2), ledit premier élément de soupape (26, 27, 29, 35, 36) et ledit second élément de soupape (60) étant agencés dans des portions desdites cavités (21) séparées l'une de l'autre par un élément de fermeture (48) de celles-ci.

9. Unité hydraulique (1) comprenant un régulateur d'écoulement d'eau sanitaire (2) et un échangeur de chaleur (3), ledit régulateur (2) étant obtenu selon la revendication 1.

10. Unité hydraulique selon la revendication 9, **caractérisée en ce qu'**elle comprend un élément collecteur (5) relié à l'échangeur (3) et relié à un conduit (7) pour introduire l'eau chauffée dans ledit échangeur (3) et à un conduit (8) pour la sortie de l'eau sanitaire dudit échangeur (3).

11. Unité hydraulique selon la revendication 10, **caractérisée en ce que** ledit élément collecteur (5) comprend des moyens de soupape (108) contrôlés conçus pour diriger l'eau chauffée s'écoulant dans un conduit (101) d'un système de chauffage d'un environnement lorsqu'un premier élément de soupape (26, 27, 29, 35, 36) du régulateur (2) est dans une position de travail dans laquelle un second élément de soupape (60) de celui-ci intercepte la communication entre une première entrée (63) pour l'eau chauffée et une sortie (66) pour celle-ci du régulateur d'écoulement (2).

12. Unité hydraulique selon la revendication 9, **caractérisée en ce qu'**elle comprend un tuyau (150) reliant une chambre (22) du régulateur d'écoulement (2), reliée à une entrée (18) pour l'eau sanitaire dans celui-ci, avec une chambre (141) de l'élément collecteur (5) agencée entre un élément mobile (120, 12.1) d'un actionneur de régulation de la pression (109), contrôlant les moyens de soupape (108) conçus pour diriger l'eau chauffée s'écoulant dans ledit élément collecteur (5) vers le système de chauffage, et un élément (145) dans lequel une tige (123) pour contrôler lesdits moyens de soupape (108) glisse.

13. Unité hydraulique selon la revendication 12, **caractérisée en ce que** ledit élément collecteur comprend une chambre (140) différente agencée en amont de l'élément mobile (120, 121) de l'actionneur de régulation de la pression (109) et reliée par un tuyau (153) au conduit (8) pour la sortie de l'eau sanitaire dudit élément (5).
